# EUROPEAN PATENT APPLICATION

(11) **EP 4 434 888 A1**
(43) Date of publication of application: **25.09.2024**
(21) Application number: 23163212.6
(22) Date of filing: 21.03.2023
(51) Int. Cl.: B64D 13/06, B64D 41/00, B64C 25/22

(54) **AIR SUPPLY SYSTEM**

(71) Applicant: Hamilton Sundstrand Corporation, Charlotte, NC 28217 (US)
(72) Inventor: YELIKE, Sai Kalyan, Cork, T12 KT78 (IE)
(74) Representative: Dehns

(57) **Abstract**

An air supply system (101) for an aircraft comprising a compressor (113), an auxiliary power source (104) and a hydraulic system (102) comprising a hydraulic motor (107) and a hydraulic pump (105), wherein the auxiliary power source is configured to supply power to the hydraulic pump, the hydraulic pump is configured to pump hydraulic fluid to drive the hydraulic motor, and the hydraulic motor is configured to drive the compressor to compress air.

## Description

### FIELD OF THE INVENTION

This application relates to an air supply system for an aircraft, an aircraft and a method of operating an air supply system.

### BACKGROUND

Air supply and environmental control systems in aircraft are vital for sustainable flight, passenger safety and comfort. An essential component of these systems is the compressor, which requires a significant amount of power in relation to the rest of the system. As with most components of an aircraft, it is desirable to minimise the weight, potential wear and tear and space occupied by the compressor and any corresponding systems.

It may also be desirable to generate a high pressure ratio (PR) for operation of the compressor. Since PR characteristics are directly proportional to the size and weight of components, producing a high PR often contradicts other beneficial factors, therefore limiting the feasibility of such applications.

### SUMMARY

In a first aspect, there is provided an air supply system for an aircraft, comprising a compressor, an auxiliary power source and a hydraulic system. The hydraulic system comprises a hydraulic motor and a hydraulic pump, wherein the auxiliary power source is configured to supply power to the hydraulic pump; the hydraulic pump is configured to pump hydraulic fluid to drive to hydraulic motor; and the hydraulic motor is configured to drive the compressor to compress air.

By using the hydraulic motor to drive the compressor, it is possible to generate a high PR during operation. Using the auxiliary power source to power the hydraulic pump can mean that it is feasible to use the system for hybrid architectures without a significant increase in weight or the space occupied.

In some examples, the air supply system comprises an environmental control system, configured to supply conditioned air to a cabin of the aircraft, wherein the compressor forms part of this environmental control system.

In some examples, the environment control system is configured to supply air to the auxiliary power source.

In some examples, the auxiliary power source is an onboard power generator.

In some examples, the auxiliary power source is a hydrogen fuel cell.

In some examples, the air supply system further comprises a gearbox coupling the hydraulic motor to the compressor.

In some examples, the compressor is configured to receive engine bleed air and/or RAM air.

In some examples, the air supply system comprises an existing hydraulic system of the aircraft, and the hydraulic system forms part of the existing hydraulic system.

In some examples, the existing hydraulic system is a landing gear hydraulic system, comprising landing gear actuators.

In some examples, the air supply system comprises a valve configured to switch between provision of hydraulic fluid between the hydraulic motor and another component of the existing hydraulic system.

In some examples, the valve is configured to increase the proportion of hydraulic fluid which bypasses the hydraulic motor to permit operation of the landing gear actuators during take off and/or landing.

In some examples, the valve is configured to increase the proportion of hydraulic fluid that flows to the hydraulic motor during aircraft cruise.

In some examples, the valve is a direction control valve.

In a second aspect, there is provided an aircraft comprising the air supply system of the first aspect.

In a third aspect, there is a provided a method of operating an air supply system for an aircraft, comprising using an auxiliary power source to supply power to a hydraulic pump; driving a hydraulic motor using the hydraulic pump to pump liquid; and driving a compressor to compress air using the hydraulic motor.

The aircraft of the second aspect may comprise any of the features described with respect to the first aspect. The method of the third aspect may comprise any of the features or functional steps described in relation to the first and/or second aspects.

### BRIEF DESCRIPTION OF THE DRAWINGS

Various examples will now be described with reference to the accompanying drawings in which:

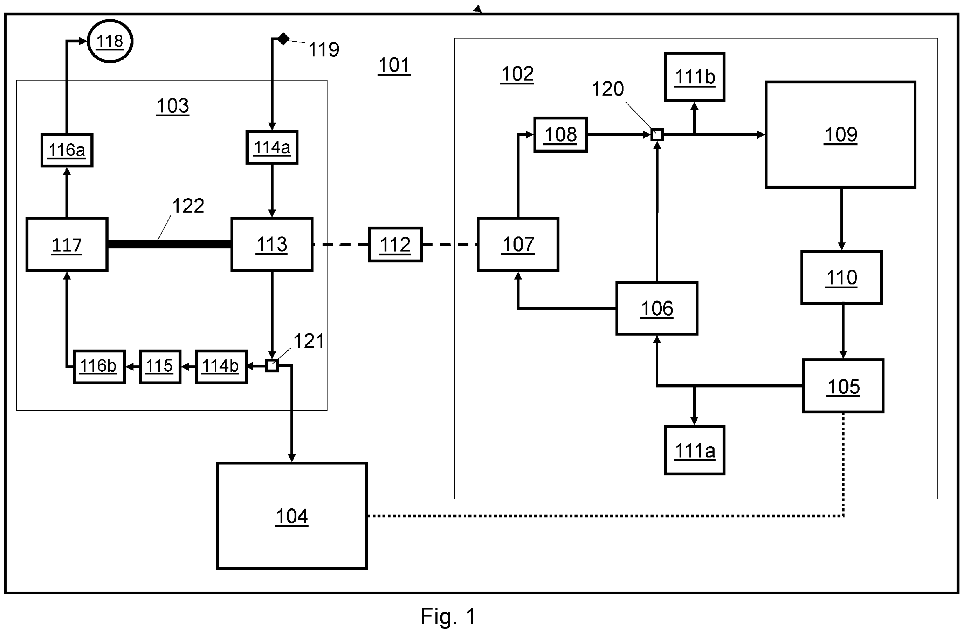

Fig. 1 shows a schematic diagram of an air supply system.

### DETAILED DESCRIPTION

With reference to Fig. 1, an air supply system 101 comprises a hydraulic system 102, an environmental control system 103 and an auxiliary power source 104. The air supply system 101 is comprised in an aircraft (not shown).

In the present example, the hydraulic system 102 is a landing gear hydraulic system 102. The landing gear hydraulic system 102 comprises a hydraulic fluid reservoir 110, a hydraulic pump 105, a 3-way direction control valve (DCV) 106, a hydraulic motor 107, a check valve 108, a combiner 120 and landing gear actuators 109. The hydraulic fluid reservoir 110 is fluidly connected to the hydraulic pump 105. The hydraulic pump 105 is fluidly connected to the DCV 106. The DCV 106 is fluidly connected to both the hydraulic motor 107 and the combiner 120. The hydraulic motor 107 is also fluidly connected to the combiner 120 via the check valve 108. The combiner 120 is fluidly connected to the landing gear actuators 109.

The landing gear hydraulic system 102 comprises a first accumulator 111a which is fluidly connected between the hydraulic pump 105 and 3-way DCV 106. The landing gear hydraulic system 102 comprises a second accumulator 111b between the combiner 120 and landing actuators 109.

The environmental control system 103 comprises a compressor 113, heat exchangers 114a 114b 116a 116b, a dehumidifier 115, a turbine 117 and a shaft 122. The compressor 113 is fluidly connected to the heat exchanger 114a and splitter 121. The heat exchanger 114a is fluidly connected to a supply of engine bleed air 119, and the splitter 121 is fluidly connected to the second heat exchanger 114b. The heat exchanger 114b is fluidly connected to the dehumidifier 115. The dehumidifier 115 is fluidly connected to the heat exchanger 116b, which is itself fluidly connected to the turbine 117. The turbine is fluidly connected to another heat exchanger 116a, which is fluidly connected to an outlet of aircraft cabin fresh air 118.

The hydraulic motor 107 of the landing gear hydraulic system 102 is mechanically coupled to the compressor 113 of the environmental control system 103 via a gearbox 112. The compressor is also mechanically coupled to the turbine 117 via a shaft 122.

The auxiliary power source 104 is fluidly connected to the splitter 121 of the environmental control system 103, and electronically connected to the hydraulic pump 105 of the landing gear hydraulic system 102.

The auxiliary power source 104 is configured to supply power to the hydraulic pump 105. The hydraulic pump 105 is configured to pump hydraulic fluid around the landing gear hydraulic system 102. The reservoir 110 acts as a store for this hydraulic fluid, and supplies hydraulic fluid to the hydraulic pump 105. The 3-way DCV 106 may be configured to control the proportion of hydraulic fluid that flows to the hydraulic motor 107 and the proportion which bypasses the hydraulic motor 107 before reaching the landing gear actuators 109. The check valve 108 is configured to prevent hydraulic fluid from flowing back towards the hydraulic motor 107 when being provided to bypass this component. After being supplied to operate the landing gear actuators 109, the hydraulic fluid returns to the reservoir 110.

During periods of aircraft take-off and/or landing (or in periods shortly before landing and shortly after take-off), the 3-way DCV 106 is configured to increase the proportion of hydraulic fluid which bypasses the hydraulic motor 107, allowing for operation of the landing gear actuators 109. The 3-way DCV 106 may prevent any hydraulic fluid flowing to the hydraulic motor 107 at this time. During periods of aircraft cruise, the 3-way DCV 106 is configured to increase the proportion of hydraulic fluid provided to the hydraulic motor 107.

The accumulators 111a 111b are configured to maintain a suitable pressure throughout the system landing gear hydraulic system 102.

Filters (not included in the figure), e.g. oil filters, may be included in the landing gear hydraulic system 102 to remove particulates from the hydraulic fluid in use. These may be placed in series between the landing gear actuators 109 and reservoir 110, and/or between the hydraulic pump 105 and 3-way DCV 106.

The hydraulic motor 107 is configured to drive the compressor 113 of the environmental control system 103, when it is supplied with pressurised hydraulic fluid from the hydraulic pump 105. The mechanical coupling of the hydraulic motor 107 and compressor 113 is via a gearbox 112, so that the torque and/or speed desirable for the compressor 113 can be achieved using the mechanical work provided by the hydraulic motor 107.

The heat exchanger 114a is configured to decrease the temperature of engine bleed air supplied to the environmental control system 103 via the engine bleed air input 119. This cooled air is provided to the compressor 113 and compressed, then provided to the splitter 121. The splitter 121 is configured to control the proportion of the compressed air provided to the auxiliary power source 104 and the heat exchanger 114b. The heat exchanger 114b is also configured to decrease the temperature of the compressed air provided to it, before the cooled air is channelled into the dehumidifier 115 to condense the moisture contained in the air so that it can be removed. The heat exchanger 116b is configured to increase the temperature of the air it receives, before the air is channelled towards the turbine 117. The turbine 117 is configured so that rotation caused by the expansion of the provided air supplies some power to the compressor 113 via their mechanical coupling. The heat exchanger 116a is configured to increase the temperature of the air to that which is desired for a cabin of the aircraft, so that after the air from the turbine passes through the heat exchanger 116a, it can be released into the aircraft cabin via the cabin fresh air outlet 118. The environmental control system 103 thereby provides conditioned air (e.g. at the correct temperature and pressure for the cabin) to the cabin. In the present example, the environmental control system 103 also supplies compressed air (from the compressor 113) to the auxiliary power source 104.

Additional valves may be present within the air supply system 101 to ensure the environmental control system 103 and landing gear hydraulic system 102 function efficiently.

The auxiliary power source 104 may be a hydrogen fuel cell, another onboard power generator. The auxiliary power source 104 may not be configured to supply power for propulsion, but for other auxiliary components of the aircraft. In some examples, the auxiliary power source 104 may provide some power to propel the aircraft, but may not be the primary power source for propulsion, which may instead be an engine (not shown). The auxiliary power source 104 uses compressed air from the compressor 113, as well as fuel (e.g. hydrogen) to generate power.

The landing gear hydraulic system 102 may alternatively be any other existing hydraulic system of the aircraft, provided it also contains a hydraulic pump 105 which can be used to provide pressurised hydraulic fluid to a hydraulic motor 107.

The engine bleed air input 119 may alternatively provide RAM air as well as/instead of engine bleed air to the environmental control system 103.

Various aspects of the apparatus disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. An air supply system for an aircraft comprising:
a compressor;
an auxiliary power source; and
a hydraulic system comprising a hydraulic motor and a hydraulic pump,
wherein the auxiliary power source is configured to supply power to the hydraulic pump,
wherein the hydraulic pump is configured to pump hydraulic fluid to drive the hydraulic motor,
wherein the hydraulic motor is configured to drive the compressor to compress air.

2. The air supply system of claim 1, wherein the air supply system comprises an environmental control system,
wherein the environmental control system is configured to supply conditioned air to a cabin of the aircraft, and
the compressor forms part of the environmental control system.

3. The air supply system of claim 2, wherein the environmental control system is configured to supply air to the auxiliary power source.

4. The air supply system of any preceding claim, wherein the auxiliary power source is an onboard power generator.

5. The air supply system of any preceding claim, wherein the auxiliary power source is a hydrogen fuel cell.

6. The air supply system of any preceding claim, further comprising a gearbox coupling the hydraulic motor to the compressor.

7. The air supply system of any preceding claim, wherein the compressor is configured to receive engine bleed air and/or RAM air.

8. The air supply system of any preceding claim, wherein the air supply system comprises an existing hydraulic system of the aircraft, and the hydraulic system forms part of the existing hydraulic system.

9. The air supply system of claim 8, wherein the existing hydraulic system is a landing gear hydraulic system, comprising landing gear actuators.

10. The air supply system of claim 8 or 9, and comprising a valve configured to switch provision of hydraulic fluid between the hydraulic motor and another component of the existing hydraulic system.

11. The air supply system of claim 10 when dependent on claim 9, wherein the valve is configured to increase the proportion of hydraulic fluid which bypasses the hydraulic motor to permit operation of the landing gear actuators during aircraft take-off and/or landing.

12. The air supply system of claim 11, wherein the valve is configured to increase the proportion of hydraulic fluid that flows to the hydraulic motor during aircraft cruise.

13. The air supply system of any of claims 10 to 12, wherein the valve is a direction control valve.

14. An aircraft comprising the air supply system of any preceding claim.

15. A method of operating an air supply system for an aircraft comprising, the method comprising:
using an auxiliary power source to supply power to a hydraulic pump;
driving a hydraulic motor using the hydraulic pump to pump liquid;
driving a compressor to compress air using the hydraulic motor.
